# EUROPÄISCHE PATENTSCHRIFT

(11) **EP 2 550 171 B1**
(45) Veröffentlichungstag und Bekanntmachung des Hinweises auf die Patenterteilung: **30.08.2017**
(21) Anmeldenummer: 11704539.3
(22) Anmeldetag: 03.02.2011
(51) Int. Cl.: B60K 6/52, B60K 6/48, B60K 7/00, B60L 15/38, B60W 10/08, B60W 20/00, B60W 50/00

(54) **FAHRZEUG MIT ZUMINDEST ZWEI EINZELRADANTRIEBSEINHEITEN**
VEHICLE HAVING AT LEAST TWO SINGLE-WHEEL DRIVE UNITS
VÉHICULE DOTÉ D'AU MOINS DEUX UNITÉS D'ENTRAÎNEMENT À ROUES INDIVIDUELLES

(30) Priorität: 20.03.2010 DE 102010012153
(43) Veröffentlichungstag der Anmeldung: 30.01.2013
(73) Patentinhaber: Audi AG, 85045 Ingolstadt (DE)
(72) Erfinder: KRUSE, Alexander, 85051 Ingolstadt (DE); MAIER, Ruben, 89542 Herbrechtingen (DE); WEIN, Michael, 92358 Seubersdorf (DE)
(86) Internationale Anmeldenummer: PCT/EP2011/000497
(87) Internationale Veröffentlichungsnummer: WO 2011/116852

(56) Entgegenhaltungen:
- EP-A2- 2 014 531
- WO-A1-2009/077835
- DE-A1-102005 055 001
- DE-A1-102007 051 590
- US-A1- 2009 242 289

## Beschreibung

Die Erfindung betrifft ein Fahrzeug mit zumindest zwei Einzelradantriebseinheiten gemäß dem Oberbegriff des Patentanspruches 1 sowie ein Verfahren zur Ansteuerung der Einzelradantriebseinheiten nach dem Patentanspruch 11.

Bei Fahrzeugen mit ausschließlich elektrischem Antrieb oder auch bei Hybridfahrzeugen mit einer Brennkraftmaschine sowie mit elektrischem Antrieb sind Antriebssysteme bekannt, die an zumindest einer Fahrzeugachse zwei voneinander unabhängig ansteuerbare Elektromaschinen aufweisen, die jeweils ein Antriebsrad auf der linken sowie auf der rechten Fahrzeugseite antreiben.

Aus der DE 40 11 291 A1 ist ein Fahrzeug bekannt, das sowohl an der Vorderachse als auch an der Hinterachse jeweils zwei Antriebs-Elektromotoren aufweist, von denen der eine zum Antrieb eines Antriebsrades auf der linken Fahrzeugseite und der andere zum Antrieb eines Antriebsrades auf der rechten Fahrzeugseite vorgesehen ist. Die Antriebs-Elektromotoren sind mittels einer elektronischen Steuereinrichtung ansteuerbar, die auf einen Fahrerwunsch hin ein Sollmoment ermittelt. Das Sollmoment wird in einer Momentenverteilungseinheit in ein erstes Sollmoment für die erste Antriebseinheit und in ein zweites Sollmoment für die zweite Antriebseinheit aufgeteilt.

Aus der US 2009/0242289 A ist ein gattungsgemäßes Fahrzeug bekannt, bei dem zumindest zwei Antriebsräder jeweils von Einzelradantriebseinheiten antreibbar sind. Diese sind mit Hilfe einer Steuereinrichtung ansteuerbar. Aus der DE 10 2005 055 001 A ist ein Fahrzeug bekannt, in dem eine Brennkraftmaschine und eine elektrische Maschine miteinander gekoppelt sind. Die Brennkraftmaschine wird mit einem Soll-Moment zum Erreichen einer Soll-Drehzahl beaufschlagt. Nach Erreichen der Soll-Drehzahl wird ein definiertes Bremsmoment auf die elektrische Maschine aufgebracht. Aus der EP-A-2 014 531 ist ein weiteres Fahrzeug bekannt, in dem die Vorderräder von einem gemeinsamen Elektromotor und die Hinterräder einzeln über Elektromotoren antreibbar sind. Das Drehmoment aller Motoren ist so gestaltet, dass es dem vom Fahrer angeforderten Gesamt-Moment entspricht.

Der Erfindung liegt die Problematik zugrunde, dass die Antriebs-Elektromotoren aufgrund von Fertigungs- und Bauteiltoleranzen bei gleichem Sollmoment ein geringfügig unterschiedliches Ansprechverhalten aufweisen können. Dies wird bei einer Alterung über den Lebenszyklus des Fahrzeuges verstärkt. Die sich daraus ergebende Momentendifferenz zwischen den beiden Antriebs-Elektromotoren führt dazu, dass das Fahrzeug während des Fahrbetriebes ständig mit einem um die Fahrzeughochachse wirkenden Giermoment beaufschlagt ist. Bei einem im Fahrzeug integrierten Fahrwerkregelsystem, das in Abhängigkeit von der Fahrsituation eine individuelle Verteilung des Antriebsmomentes ermöglicht, würde somit das Fahrwerkregelsystem auch bei einer Geradeausfahrt des Fahrzeugs aktiviert sein. Bei einem Fahrzeug ohne Fahrwerkregelsystem müsste demgegenüber der Fahrer ständig gegen das von den Antriebseinheiten erzeugte Giermoment gegenlenken.

Die Aufgabe der Erfindung besteht darin, ein Fahrzeug mit zumindest zwei Einzelradantriebseinheiten sowie ein Verfahren zur Ansteuerung dieser Antriebseinheiten bereitzustellen, das in einfacher Weise eine gleichmäßige Momentenverteilung ermöglicht.

Die Aufgabe wird durch die Merkmale des Patentanspruches 1 oder des Patentanspruches 11 gelöst.

Gemäß dem kennzeichnenden Teil des Patentanspruches 1 ist der Momentenverteilungseinheit eine Abgleicheinheit zugeordnet, mit der das erste und/oder das zweite Sollmoment mit einem Abgleichfaktor berichtigbar sind. Der Abgleichfaktor berücksichtigt insbesondere Fertigungs- oder Bauteiltoleranzen der beiden Antriebseinheiten, die zu einem unterschiedlichen Ansprechverhalten beider Antriebseinheiten führen können. Die Ermittlung des Abgleichfaktors erfolgt erfindungsgemäß auf der Grundlage einer erfassten ist-Momentendifferenz zwischen den beiden Antriebseinheiten, die sich bei einer Ansteuerung der beiden Antriebseinheiten mit zueinander identischen Referenzsollmomenten einstellt. Für den theoretischen Fall, dass beide Antriebseinheiten auch bezüglich ihrer Fertigungs- und Bauteiltoleranzen vollständig identisch sind, würde daher der Abgleichfaktor bei Null liegen.

Mit Hilfe des erfindungsgemäßen Abgleichfaktors kann der Geradeauslauf des Fahrzeugs gewährleistet werden. Zusätzlich kann ein neutrales Kurvenverhalten wie bei einem konventionellen Fahrzeug gewährleistet werden.

Die Ansteuerung der beiden Antriebseinheiten mittels der gleichen Referenzsollmomente kann beispielhaft werksseitig erfolgen. Anhand der erfassten Momentendifferenz kann dann zum Beispiel empirisch der Abgleichfaktor ermittelt werden.

Bevorzugt ist es jedoch, wenn zur Erfassung der Momentendifferenz zwischen beiden Antriebseinheiten bereits im Fahrzeug vorgesehene Sensoren verwendet werden, die ohnehin für eine Fahrdynamikregelung erforderlich sind. Eine derartige Fahrdynamikregelung erhöht in bekannter Weise die Kurvenagilität von Kraftfahrzeugen. Die Fahrdynamikregelung kann auf die Antriebsräder derart einwirken, dass beim Durchfahren von Kurven auf das kurvenäußere Antriebsrad beispielsweise mehr Drehmoment als auf das kurveninnere Antriebsrad verteilbar ist.

Vor diesem Hintergrund kann die erfasste Momentendifferenz ein um eine Fahrzeughochachse wirkendes Giermoment sein, das durch Gierratensensoren der Fahrdynamikregelung bei einer Geradeausfahrt des Fahrzeuges erfassbar ist.

Die Ermittlung des oben genannten Abgleichfaktors kann während eines vorgegebenen Referenzfahrbetriebs durchgeführt werden, bevorzugt bei einer Geradeausfahrt des Fahrzeuges sowie bei deaktivierter Abgleicheinheit.

Die beiden Antriebsräder können bevorzugt an der Hinterachse des Fahrzeuges auf der linken und rechten Fahrzeugseite angeordnet sein. An der Vorderachse kann dagegen das Fahrzeug zum Beispiel mittels einer Brennkraftmaschine und/oder einer weiteren Elektromaschine angetrieben werden. In diesem Fall würde die auf die Hinterachse wirkende Momentenverteilungseinheit das von der Steuereinrichtung berechnete Sollmoment in das erste Sollmoment für die Antriebseinheit an der linken Fahrzeugseite und in ein zweites Sollmoment für das Antriebsrad an der rechten Fahrzeugseite genau halbieren.

In dem so beschriebenen Referenzfahrbetrieb sind daher die ersten und zweiten Sollmomente gleich groß und können diese als Referenzsollmomente für die Ansteuerung der Antriebseinheiten dienen. Die Antriebseinheiten können beispielhaft Elektromaschinen sein, deren Fertigungs- und Bauteiltoleranzen oftmals in geringfügigem Maße zueinander schwanken können bei ansonsten baugleicher Auslegung.

Mit dem ermittelten Abgleichfaktor kann die Abgleicheinheit die ersten und zweiten Sollmomente zu entsprechend korrigierten Sollmomenten anpassen, mit denen dann die Antriebseinheiten angesteuert werden können. Erfindungsgemäß sind daher die beiden Antriebseinheiten so aufeinander abgeglichen, dass bei einer Geradeausfahrt kein Giermoment entsteht, das im Stand der Technik eine Aktivierung der Fahrdynamikregelung oder ein permanentes Gegenlenken des Fahrers verursachen würde.

Mit der oben beschriebenen Momentenverteilungseinheit kann das von der Steuereinrichtung berechnete Sollmoment als ein Summenmoment in die beiden ersten und zweiten Sollmomente für die Antriebsräder aufgeteilt werden. Zusätzlich kann das Fahrzeug eine weitere Momentenverteilungseinheit aufweisen, bei der je nach Fahrsituation eine dynamische Momentenverteilung erfolgt. In diesem Fall können die Sollmomente oder die mittels der Abgleicheinheit korrigierten Sollmomente in Abhängigkeit von Parametern einer Fahrdynamikregelung geändert werden.

Der Bedarf für eine erneute Ermittlung des Abgleichfaktors der Abgleicheinheit kann selbsttätig von der Steuereinrichtung festgelegt werden. Beispielhaft kann, sofern bei Geradeausfahrt ein Giermoment vorgegebener Größe erfasst wird, die Steuereinrichtung den Bedarf zur Neuberechnung des Abgleichfaktors erkennen und selbsttätig während einer Geradeausfahrt und bei deaktivierter Abgleicheinheit durchführen. Alternativ dazu kann der Abgleichfaktor werksseitig oder im Rahmen eines Kundendiensts voreingestellt werden oder gegebenenfalls angepasst werden.

Bevorzugt ist jedoch, wenn die Abgleicheinheit eine von der Momentenverteilungseinheit vorgegebene prozentuale Aufteilung zwischen dem ersten Sollmoment und dem zweiten Sollmoment korrigiert.

Bei Fahrzeugen mit sogenannten "elektrischem Torque Vectoring" kann der Abgleichfaktor als Vorsteuerfaktor dienen, um die Antriebe gleichzurichten. Weiterhin kann der Abgleichfaktor dazu genutzt werden, die Antriebe gegeneinander zu adaptieren, so dass die Antriebe auf identische Sollmomente nahezu identische Ist-Momente abgeben. Dazu kann eine Adaption entweder in dem Antriebsregelsystem durch einen Adaptionsoffset auf das Sollmoment, oder in den Leistungselektroniken erfolgen.

Nachfolgend ist ein Ausführungsbeispiel der Erfindung anhand der beigefügten Figuren beschrieben.

Es zeigen:
- Fig. 1: in grob schematischer Ansicht ein Antriebssystem eines Kraftfahrzeugs;
- Fig. 2: in einem Momenten-Zeit-Diagramm die Momentendifferenz zwischen den beiden Antriebseinheiten; und
- Fig. 3: in einer Prinzipdarstellung die Verfahrensschritte zur Einstellung des Korrekturfaktors der Korrektureinheit.

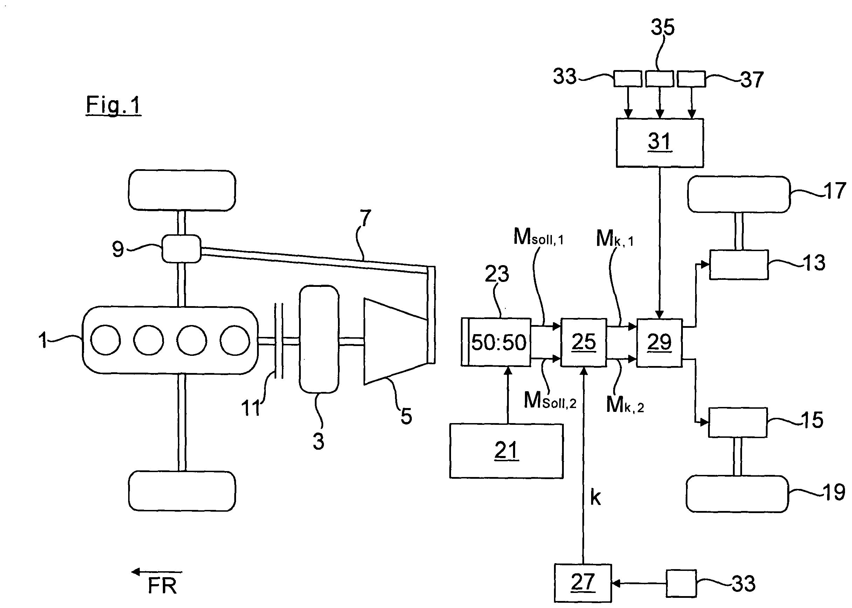

In der Fig. 1 ist in einer Prinzipdarstellung das Antriebssystem eines Hybridfahrzeuges dargestellt, das mit einem Allradantrieb versehen ist. An der vorderen Fahrzeugachse ist eine Brennkraftmaschine 1 sowie eine Elektromaschine 3 in den Antriebsstrang geschaltet und mit einem Getriebe 5 in Verbindung, das über eine Getriebeausgangswelle 7 sowie ein nur angedeutetes Achsdifferenzial 9 auf die Vorderachse abtreibt. Zwischen der Brennkraftmaschine 1 und der Elektromaschine 3 ist eine Kupplung 11 geschaltet, die je nach Fahrsituation geöffnet oder geschlossen ist.

An der Hinterachse des Fahrzeuges sind zwei weitere Elektromaschinen 13, 15 angeordnet, von denen die erste Elektromaschine 13 das an der rechten Fahrzeugseite befindliche Antriebsrad 17 antreibt, während die zweite Elektromaschine 15 das an der linken Fahrzeugseite angeordnete Antriebsrad 19 antreibt.

Wie aus der Fig. 1 weiter hervorgeht, weist das Kraftfahrzeug zur Ansteuerung der Elektromaschinen 3, 13, 15 sowie der Brennkraftmaschine 1 eine zentrale Steuereinrichtung 21 auf, die gemäß der Fig. 1 einen Fahrerwunsch erfasst. Auf dieser Grundlage berechnet die Steuereinrichtung 21 nicht näher dargestellte Sollmomente für die Brennkraftmaschine 1/Elektromaschine 3 der Vorderachse und ein mit Mₛₒₗₗ bezeichnetes Sollmoment für den Hinterachsantrieb.

Zum Verständnis der Erfindung ist nachfolgend anhand der Fig. 1 der Signalweg zwischen der zentralen Steuereinrichtung 21 und den beiden Elektromaschinen 13, 15 der Hinterachse erläutert. Demzufolge wird das von der Steuereinrichtung 21 berechnete Sollmoment Mₛₒₗₗ an eine Momentenverteilungseinheit 23 geleitet, in der das Sollmoment Mₛₒₗₗ in ein erstes Sollmoment M_{soll,1} für das rechte hintere Antriebsrad 17 und in ein zweites Sollmoment M_{soll,2} für das linke hintere Antriebsrad 19 aufgeteilt wird. Die gleich großen, ersten und zweiten Sollmomente M_{soll,1}, M_{soll,2} werden dann in einer Bearbeitungseinheit 25 mittels eines von einer Abgleicheinheit 27 berechneten Abgleichfaktors k berichtigt und als korrigierte Sollmomente M_{1,K} und M_{2,K} an die Elektromaschinen 13, 15 weitergeleitet.

Zwischen der Bearbeitungseinheit 25 und den beiden Elektromaschinen 13, 15 ist eine dynamische Momentenverteilungseinheit 29 geschaltet, bei der die korrigierten Sollmomente M_{1,K} und M_{2,K} in Abhängigkeit von Fahrsituationen dynamisch angepasst werden können, um beispielsweise eine Kurvenagilität des Fahrzeuges beim Durchfahren von Kurven zu erhöhen. Hierzu ist eine Fahrwerksregelung 31 mit damit verknüpften Fahrdynamiksensoren, etwa Gierratensensoren 33, Beschleunigungssensoren 35 und Drehzahlsensoren 37, im Fahrzeug vorgesehen, auf deren Grundlage die dynamische Momentenverteilung in der Momentenverteilungseinheit 29 erfolgt.

Mittels der Korrektureinheit 27 können unterschiedliche Bauteil- oder Fertigungstoleranzen der beiden baugleich dimensionierten Elektromaschinen 13, 15 bei der Momentenverteilung berücksichtigt werden.

Nach einem mittels der Abgleicheinrichtung erfolgten Abgleich kann daher die prozentuale Aufteilung der Sollmomente M_{soll,1}, M_{soll,2} nicht mehr bei 50:50 liegen, sondern in Abhängigkeit von Bauteil- und/oder Fertigungstoleranzen geringfügig verschoben sein.

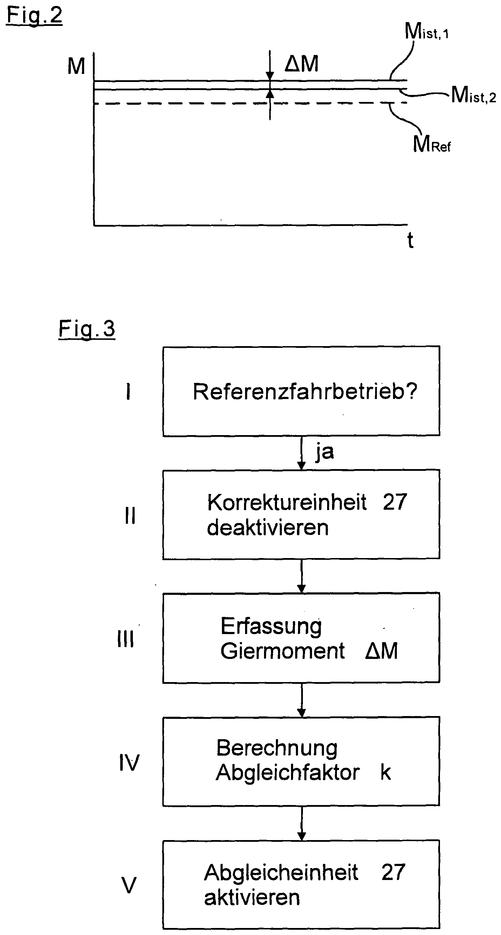

Im Folgenden werden anhand der Fig. 2 und 3 die Verfahrensschritte zur Ermittlung des Abgleichfaktors erläutert. So erfolgt zunächst in einem ersten Schritt I eine Abfrage, ob das Fahrzeug in einem Referenzfahrbetrieb betrieben wird. Im vorliegenden Ausführungsbeispiel liegt bei Geradeausfahrt des Fahrzeugs ein solcher Referenzfahrbetrieb vor.

Wird im Verfahrensschritt I eine solche Geradeausfahrt erkannt, so kann zur Ermittlung des Abgleichfaktors k die Abgleicheinheit 27 deaktiviert werden, wie es im Schritt II gezeigt ist. Bei deaktivierter Abgleicheinheit 27 werden die gleich großen ersten und zweiten Sollmomente M_{soll,1}, M_{soll,2} ohne weitere Anpassung zu den Elektromaschinen 13, 15 geleitet. Die beiden Sollmomente M_{soll,1}, M_{soll,2} werden daher als Referenzsollmomente M_{Ref} der Ermittlung des Abgleichfaktors k zugrundegelegt, wie sie in dem Diagramm der Fig. 2 angedeutet sind. Darin sind auch Istmomente M_{ist,1} und M_{ist,2} der beiden Elektromaschinen 13, 15 gezeigt, die sich im Referenzfahrbetrieb ergeben. Die beiden Istmomente M_{ist,1}, M_{ist,2} unterscheiden sich aufgrund von Bauteil- oder Fertigungstoleranzen um die Momentendifferenz ΔM_{G} geringfügig voneinander. Diese Momentendifferenz ΔM_{G} kann im Schritt III im Referenzfahrbetrieb in einfacher Weise mit Hilfe der Gierratensensoren 33 der Fahrdynamikregelung 31 erfasst werden.

Die Gierratensensoren 33 sind daher gemäß der Fig. 1 in Signalverbindung mit der Abgleicheinheit 27. Diese berechnet im Schritt IV auf der Grundlage des erfassten Giermoments ΔM_{G} den Abgleichfaktor k. Anschließend kann im Schritt V die Abgleicheinheit 27 wieder aktiviert werden, wodurch automatisch ein Abgleich zwischen beiden Elektromaschinen 13, 15 durchführbar ist.

## Patentansprüche

1. Fahrzeug mit zumindest zwei Antriebsrädern (17, 19), die jeweils von, insbesondere baugleich dimensionierten, Einzelradantriebseinheiten (13, 15) antreibbar sind, die mittels einer Steuereinrichtung (21) ansteuerbar sind, die ein Sollsummenmoment (Mₛₒₗₗ) berechnet, das in einer Momentenverteilungseinheit (23) in ein erstes Sollmoment (M_{soll,1}) für die erste Antriebseinheit (13) und in ein zweites Sollmoment (M_{soll,2}) für die zweite Antriebseinheit (15) aufteilbar ist, **dadurch gekennzeichnet, dass** der Momentenverteilungseinheit (23) eine Abgleicheinheit (27) zugeordnet ist, mit der das erste und/oder das zweite Sollmoment (M_{soll,1}, M_{soll,2}) mit einem Abgleichfaktor (k) berichtigbar sind, der in Abhängigkeit einer sich aufgrund von Fertigungs- und/oder Bauteiltoleranzen ergebenden Momentendifferenz (ΔM_{G}) zwischen den Antriebseinheiten (13, 15) ermittelbar ist.

2. Fahrzeug nach Anspruch 1, **dadurch gekennzeichnet, dass** die Erfassung der Momentendifferenz (ΔM_{G}) in einem Referenzfahrbetrieb erfolgt, in dem die beiden Antriebseinheiten (13, 15) mit, insbesondere gleich großen Referenzsollmomenten (M_{ref}) ansteuerbar sind.

3. Fahrzeug nach Anspruch 1 oder 2, **dadurch gekennzeichnet, dass** die Momentendifferenz (ΔM_{G}) ein um eine Fahrzeughochachse wirkendes Giermoment ist.

4. Fahrzeug nach einem der Ansprüche 1, 2 oder 3, **dadurch gekennzeichnet, dass** die beiden Antriebsräder (17, 19) an einer Fahrzeugachse auf der linken und rechten Fahrzeugseite angeordnet sind, und/oder die Momentenverteilungseinheit (23) das Sollmoment (Mₛₒₗₗ) in das erste Sollmoment (M_{soll,1}) und in das zweite Sollmoment (M_{soll,2}) halbiert.

5. Fahrzeug nach Anspruch 4, **dadurch gekennzeichnet, dass** das erste Sollmoment (M_{soll,1}) und das zweite Sollmoment (M_{soll,2}) der Momentenverteilungseinheit (23) die Referenzsollmomente (M_{ref}) sind.

6. Fahrzeug nach einem der vorhergehenden Ansprüche, **dadurch gekennzeichnet, dass** mittels der Abgleicheinheit (27) eine von der Momentenverteilungseinheit (23) vorgenommene prozentuale Aufteilung zwischen den ersten und zweiten Sollmomenten (M_{soll,1}, M_{soll,2}) geändert wird.

7. Fahrzeug nach einem der vorhergehenden Ansprüchen, **dadurch gekennzeichnet, dass** die Abgleicheinheit (27) die ersten und zweiten Sollmomente (M_{soll,1}, M_{soll,2}) zu korrigierten Sollmomenten (M_{K,1}, M_{K,2}) anpasst, mit denen die ersten und zweiten Antriebseinheiten (13, 15) ansteuerbar sind.

8. Fahrzeug nach einem der vorhergehenden Ansprüche, **dadurch gekennzeichnet, dass** zusätzlich zur Momentenverteilungseinheit (23) eine weitere Momentenverteilungseinheit (29) zur dynamischen Momentenverteilung vorgesehen ist, bei der die Sollmomente (M_{soll,1}, M_{soll,2}) oder die korrigierten Sollmomente (M_{K,1}, M_{K,2}) in Abhängigkeit von einer Fahrdynamikregelung änderbar sind.

9. Fahrzeug nach einem der vorhergehenden Ansprüche, **dadurch gekennzeichnet, dass** der Bedarf zur sowie die Durchführung der Ermittlung des Abgleichfaktors (k) selbsttätig von der Steuereinrichtung (21) festlegbar ist.

10. Fahrzeug nach einem der Ansprüche 1 bis 8, **dadurch gekennzeichnet, dass** der Abgleichfaktor (k) einmalig, insbesondere werkseitig, voreinstellbar ist.

11. Verfahren zur Ansteuerung von Antriebseinheiten (13, 15) eines Fahrzeugs mit zumindest zwei Antriebsrädern (17, 19), die jeweils von, insbesondere baugleich dimensionierten, Einzelradantriebseinheiten (13, 15) angetrieben werden, die mittels einer Steuereinrichtung (21) angesteuert werden, die ein Sollsummenmoment (Mₛₒₗₗ) berechnet, das in einer Momentenverteilungseinheit (23) in ein erstes Sollmoment (M_{soll,1}) für die erste Antriebseinheit (13) und in ein zweites Sollmoment (M_{soll,2}) für die zweite Antriebseinheit (15) aufgeteilt wird, **dadurch gekennzeichnet, dass** der Momentenverteilungseinheit (23) eine Abgleicheinheit (27) zugeordnet ist, die das erste und/oder das zweite Sollmoment (M_{soll,1}, M_{soll,2}) mit einem Abgleichfaktor (k) berichtigt, der in Abhängigkeit einer sich aufgrund von Fertigungs- und/oder Bauteiltoleranzen ergebenden Momentendifferenz (ΔM_{G}) zwischen den Antriebseinheiten (13, 15) ermittelt wird.

## Claims

1. Vehicle having at least two drive wheels (17, 19) which can each be driven by single-wheel drive units (13, 15), in particular having identical dimensions, which are controlled by means of a controller (21) which calculates a desired total moment (Mₛₒₗₗ) which can be divided in a moment distribution unit (23) into a first desired moment (M_{soll,1}) for the first drive unit (13) and into a second desired moment (M_{soll,2}) for the second drive unit (15), **characterised in that** an adjustment unit (27) is associated with the moment distribution unit (23), with which adjustment unit the first and/or second desired moment(s) (M_{soll,1}, M_{soll,2}) can be corrected by an adjustment factor (k) which can be determined as a function of a moment difference (ΔM_{G}), resulting due to manufacturing and/or component tolerances, between the drive units (13, 15).

2. Vehicle according to claim 1, **characterised in that** the moment difference (ΔM_{G}) is acquired in a reference drive mode in which the two drive units (13, 15) can be controlled with, in particular, identical reference desired moments (M_{ref}).

3. Vehicle according to claim 1 or 2, **characterised in that** the moment difference (ΔM_{G}) is a yawing moment that acts around a vertical vehicle axis.

4. Vehicle according to any of claims 1, 2 or 3, **characterised in that** the two drive wheels (17, 19) are arranged on the left and right vehicle sides of a vehicle axle and/or the moment distribution unit (23) halves the desired moment (Mₛₒₗₗ) into the first desired moment (M_{soll,1}) and into the second desired moment (M_{soll,2}).

5. Vehicle according to claim 4, **characterised in that** the first desired moment (M_{soll,1}) and the second desired moment (M_{soll,2}) of the moment distribution unit (23) are the reference desired moments (M_{ref}).

6. Vehicle according to any of the preceding claims, **characterised in that** a percentage distribution, implemented by the moment distribution unit (23), between the first and second desired moments (M_{soll,1}, M_{soll,2}) is changed by means of the adjustment unit (27).

7. Vehicle according to any of the preceding claims, **characterised in that** the adjustment unit (27) adjusts the first and second desired moments(M_{soll,1}, M_{soll,2}) to corrected desired moments (M_{K,1}, M_{K,2}) with which the first and second drive units (13, 15) can be controlled.

8. Vehicle according to any of the preceding claims, **characterised in that** in addition to the moment distribution unit (23) a further moment distribution unit (29) is provided for dynamic moment distribution, in which the desired moments (M_{soll,1}, M_{soll,2}) or the corrected desired moments (M_{K,2}, M_{K,2}) can be changed as a function of a vehicle dynamics control system.

9. Vehicle according to any of the preceding claims, **characterised in that** the requirement for and the implementation of the determination of the adjustment factor (k) can be defined automatically by the controller (21).

10. Vehicle according to any of claims 1 to 8, **characterised in that** the adjustment factor (k) can be pre-set one time, in particular in the factory.

11. Method for controlling drive units (13, 15) of a vehicle having at least two drive wheels (17, 19) which are each driven by single-wheel drive units (13, 15), in particular having identical dimensions, which are controlled by means of a controller (21) which calculates a desired total moment (Mₛₒₗₗ) which can be divided in a moment distribution unit (23) into a first desired moment (M_{soll,1}) for the first drive unit (13) and into a second desired moment (M_{soll,2}) for the second drive unit (15), **characterised in that** an adjustment unit (27) is associated with the moment distribution unit (23), which adjustment unit corrects the first and/or second desired moment(s) (M_{soll,1}, M_{soll,2}) by an adjustment factor (k) which can be determined as a function of a moment difference (ΔM_{G}), resulting due to manufacturing and/or component tolerances, between the drive units (13, 15).

## Revendications

1. Véhicule avec au moins deux roues motrices (17, 19), qui peuvent être entraînées à chaque fois par des unités d'entraînement de roues individuelles (13, 15) qui sont en particulier dimensionnées à l'identique et qui peuvent être commandées au moyen d'un dispositif de commande (21) qui calcule un couple cumulé de consigne (M_{Soll}) qui peut être divisé dans une unité de répartition de couple (23) en un premier couple de consigne (M_{Soll,1}) destiné à la première unité d'entraînement (13) et un deuxième couple de consigne (M_{Soll,2}) destiné à la deuxième unité d'entraînement (15), **caractérisé en ce qu'**il est associé à l'unité de répartition de couple (23) une unité d'équilibrage (27) avec laquelle le premier et/ou le deuxième couple de consigne (M_{Soll,1}, M_{Soll,2}) peuvent être corrigés avec un facteur d'équilibrage (k) qui peut être déterminé en fonction d'une différence de couple (ΔM_{G}), résultant des tolérances de fabrication et/ou de pièces, entre les unités d'entraînement (13, 15).

2. Véhicule selon la revendication 1, **caractérisé en ce que** la détection de la différence de couple (ΔM_{G}) s'effectue dans un mode de fonctionnement de roulage de référence dans lequel les deux unités d'entraînement (13, 15) peuvent être commandées avec des couples de consigne de référence (M_{ref}) en particulier de grandeur identique.

3. Véhicule selon la revendication 1 ou 2, **caractérisé en ce que** la différence de couple (ΔM_{G}) est un couple de lacet agissant autour d'un axe vertical de véhicule.

4. Véhicule selon l'une des revendications 1, 2 ou 3, **caractérisé en ce que** les deux roues motrices (17,19) sont agencées au niveau d'un essieu de véhicule du côté gauche et du côté droit du véhicule et/ou **en ce que** l'unité de répartition de couple (23) divise par deux le couple de consigne (M_{Soll}) en premier couple de consigne (M_{Soll,1}) et deuxième couple de consigne (MₛₒlI,₂)_{'}

5. Véhicule selon la revendication 4, **caractérisé en ce que** le premier couple de consigne (M_{Soll,1}) et le deuxième couple de consigne (M_{Soll,2}) de l'unité de répartition de couple (23) sont les couples de consigne de référence (M_{ref}).

6. Véhicule selon l'une des revendications précédentes, **caractérisé en ce qu'**une division en pourcentage effectuée par l'unité de répartition de couple (23) entre les premier et deuxième couples de consigne (M_{Soll,1}, (M_{Soll,2}) est modifiée au moyen de l'unité d'équilibrage (27).

7. Véhicule selon l'une des revendications précédentes, **caractérisé en ce que** l'unité d'équilibrage (27) adapte les premier et deuxième couples de consigne (M_{Soll,1}, M_{Soll,2}) en couples de consigne corrigés (M_{K,1}, M_{K,2}) avec lesquels les première et deuxième unités d'entraînement (13, 15) peuvent être commandées.

8. Véhicule selon l'une des revendications précédentes, **caractérisé en ce que**, en plus de l'unité de répartition de couple (23), une autre unité de répartition de couple (29) est prévue pour la répartition dynamique de couple lors de laquelle les couples de consigne (M_{Soll,1}, M_{Soll,2}) ou les couples de consigne corrigés (M_{K,1}, M_{K,2}) peuvent être modifiés en fonction d'une régulation dynamique de roulage.

9. Véhicule selon l'une des revendications précédentes, **caractérisé en ce que** la nécessité de déterminer le facteur d'équilibrage (k) et la mise en oeuvre de cette détermination sont spécifiées automatiquement par le dispositif de commande (21).

10. Véhicule selon l'une des revendications 1 à 8, **caractérisé en ce que** le facteur d'équilibrage (k) peut être préréglé une fois, en particulier en atelier.

11. Procédé de commande d'unités d'entraînement (13, 15) d'un véhicule avec au moins deux roues motrices (17, 19) qui sont entraînées à chaque fois par des unités d'entraînement de roues individuelles (13, 15) qui sont en particulier dimensionnées à l'identique et qui sont commandées au moyen d'un dispositif de commande (21) qui calcule un couple cumulé de consigne (M_{Soll}) qui est divisé dans une unité de répartition de couple (23) en un premier couple de consigne (M_{Soll,1}) destiné à la première unité d'entraînement (13) et un deuxième couple de consigne (M_{Soll,2}) destiné à la deuxième unité d'entraînement (15), **caractérisé en ce qu'**il est associé à l'unité de répartition de couple (23) une unité d'équilibrage (27) qui corrige le premier et/ou le deuxième couple de consigne (M_{Soll,1}, M_{Soll,2}) avec un facteur d'équilibrage (k) qui est déterminé en fonction d'une différence de couple (ΔM_{G}), résultant des tolérances de fabrication et/ou de pièces, entre les unités d'entraînement (13, 15).
